# EUROPÄISCHE PATENTANMELDUNG

(11) **EP 2 602 190 A2**
(43) Veröffentlichungstag der Anmeldung: **12.06.2013**
(21) Anmeldenummer: 12008175.7
(22) Anmeldetag: 07.12.2012
(51) Int. Cl.: B64D 11/06, B60N 2/015, B60N 2/24

(54) **Befestigungsvorrichtung**

(30) Priorität: 08.12.2011 DE 202011108804 U
(71) Anmelder: Michler, Walter, 82279 Eching/Ammersee (DE)
(72) Erfinder: Michler, Walter, 82279 Eching/Ammersee (DE)
(74) Vertreter: Grättinger Möhring von Poschinger Patentanwälte Partnerschaft

(57) **Zusammenfassung**

Die Erfindung betrifft eine Befestigungsvorrichtung zur Befestigung beispielsweise eines Flugzeugsitzes an einer Loch-Rast-Schiene. Die Befestigungsvorrichtung umfasst einen Grundkörper (6), einen Riegelkörper (9) mit mindestens einem pilzförmigen Riegelelement und ein Rastelement, welches bei Betätigung eines Betätigungshebels (33) gegen die Vorspannkraft einer Feder (F) in eine nicht in die Loch-Rast-Schiene eingreifende angehobene Stellung anhebbar und bei nicht betätigtem Betätigungshebel (33) mittels der Federeinrichtung (F) gegenüber dem Grundkörper (6) in eine abgesenkte, in die Loch-Rast-Schiene eingreifende Stellung vorspannbar ist. Die Bewegungen des Rastelements und des Riegelkörpers (9) relativ zum Grundkörper (6) sind dabei nicht miteinander gekoppelt. In einer ersten Endstellung des Riegelkörpers (9) greift das wenigstens eine Riegelelement zwischen zwei Vorsprüngen der Loch-Rast-Schiene in deren Hinterschneidungen ein, und ein Sperrelement (40) des Riegelkörpers (9) greift in ein zweites Sperrelement des Rastelements ein, so dass das Rastelement in seiner durch die Federeinrichtung (F) vorgespannten Stellung fixiert wird.

## Beschreibung

Die vorliegende Erfindung betrifft eine Befestigungsvorrichtung zur Befestigung eines Sitzes oder einer sonstigen Fahrzeugausstattungskomponente an einer Loch-Rast-Schiene, umfassend einen auf die Loch-Rast-Schiene aufsetzbaren Grundkörper, mindestens einen an dem Grundkörper in Längsrichtung der Loch-Rast-Schiene zwischen zwei Endstellungen verschiebbar geführten, mindestens ein pilzförmiges, zum Eingriff in die Hinterschneidungen der Loch-Rast-Schiene bestimmtes Riegelelement aufweisenden Riegelkörper, welcher mittels eines Bedienelements relativ zum Grundkörper verschiebbar ist, und mindestens ein an dem Grundkörper quer zur Längsrichtung der Loch-Rast-Schiene verschiebbar geführtes Rastelement, welches zwischen einer in die Loch-Rast-Schiene eingreifenden abgesenkten und einer nicht in die Loch-Rast-Schiene eingreifenden angehobenen Stellung bewegbar ist, wobei in der ersten Endstellung der Verschiebebewegung des Riegelkörpers das Riegelelement zwischen zwei Vorsprüngen der Loch-Rast-Schiene in deren Hinterschneidungen eingreift.

Befestigungsvorrichtungen, die der Befestigung von Sitzen und sonstigen Innenraumkomponenten in Flugzeugen oder sonstigen Fahrzeugen an standardisierten Befestigungsschienen (sog. "Loch-Rast-Schienen") dienen, sind in verschiedenen Ausgestaltungen bekannt und im Einsatz. So ist aus der europäischen Patentschrift EP-B-0583295 eine Befestigungsvorrichtung mit den eingangs dargestellten Merkmalen zur Befestigung von Luftfahrt-Innenraumgestaltungen an Befestigungsschienen bekannt. Diese Befestigungsvorrichtung umfasst, wie dargelegt einen auf die Loch-Rast-Schiene (insbesondere großflächig über Stand- bzw. Klemmflächen) aufsetzbaren Grundkörper, an dem typischerweise die zu befestigende Innenraumkomponente angebracht sein kann und dem zur Längsarretierung der Befestigungsvorrichtung in der Befestigungsschiene ein Rastelement zugeordnet ist, und einen verschiebbaren Riegelkörper mit pilzförmigen Riegelelementen zum Eingriff in Hinterschneidungen der Befestigungsschiene.

Das Rastelement kann dabei entweder als ein starr mit dem Grundkörper verbundener oder aber als ein - über mechanische Übertragungsmittel mit der Bewegung des Riegelkörpers gekoppelter - bewegbarer, nämlich im Sinne der eingangs dargelegten Gestaltung axial (auf und ab) verschiebbarer oder aber um seine Längsachse drehbarer Rastzapfen ausgestaltet sein. Die Ausführungsformen mit nicht-starrem Rastelement haben den besonderen Vorteil, dass die jeweilige Befestigungsvorrichtung - bei einer entsprechenden "entrasteten" Stellung des Rastelements - auf der Befestigungsschiene aufliegend verschoben werden kann, was bei einem starr mit dem Grundkörper verbundenen Rastelement nicht möglich ist. Hier ist für jede Veränderung der Position der Innenraumkomponente die Befestigungsvorrichtung von der Befestigungsschiene abzuheben. Der Riegelkörper ist mittels eines Betätigungshebels in Längsrichtung des Grundkörpers verschiebbar. Innerhalb des Grundkörpers sind hierzu Führungsnuten vorgesehen. Diese schließen mit am Grundkörper ausgebildeten, zur Auflage auf der Loch-Rast-Schiene bestimmten Klemmflächen einen geringen Winkel ein. Bei einer Verschiebung des Riegelkörpers in Richtung einer Verriegelungsstellung verringert sich dadurch der Abstand zwischen dem Riegelelement und den Klemmflächen, wodurch eine geklemmte Verriegelungsstellung ("Anti-Rattle"-Verbindung) hergestellt wird. In dieser Stellung bietet diese Befestigungsvorrichtung eine spielfreie und gegen Klappern gesicherte Verbindung zwischen der Befestigungsschiene und der Befestigungsvorrichtung.

Unabhängig davon, ob nun das Rastelement starr mit dem Grundkörper verbunden ist oder nicht (s.o.), besteht ein für die Praxis eminent wichtiger Aspekt solcher Befestigungsvorrichtungen, bei denen im Sinne der eingangs angegebenen Gestaltung ein Riegelkörper in Längsrichtung der Befestigungsschiene an dem Grundkörper verschiebbar geführt ist, darin, dass diese exakt an der der Einbaulage der Innenraumkomponente entsprechenden Position auf die Befestigungsschiene aufsetzbar und dort verriegelbar sind. Für die Befestigung der Innenraumkomponente muss diese - anders als dies beispielsweise für die Befestigungsvorrichtung nach der DE-A-102008048745 (s.u.) und vergleichbaren Stand der Technik gilt - nicht (insbesondere um eine halbe Teilung der Loch-Rast-Schiene) auf der Befestigungsschiene verschoben werden. Der Wegfall einer solchen Verschiebebewegung erlaubt eine optimale Nutzung des zur Verfügung stehenden Einbauraumes, insbesondere indem eine Komponente, deren Abmessungen exakt auf die lichte Weite einer Nische abgestimmt sind, passgenau in eben eine solche Nische eingebaut wird. Auch ist bei besonders schweren Einbaukomponenten (z.B. Bordküchen) ein Verschieben der Komponente auf der Befestigungsschiene nur unter großem Aufwand möglich.

Die DE-A-102008048745 zeigt eine Arretiervorrichtung für ein an einer Schiene arretierbares Objekt, bei dem ein Arretierkörper auf und ab bewegbar an einem Grundkörper gelagert ist. Ein in Längsrichtung der Befestigungsschiene bewegbar am Grundkörper gelagertes und mit dem Arretierkörper verbundenes Betätigungselement weist drei Kulissen auf, in denen Stifte geführt werden, die mit dem Arretierkörper bzw. einem Tauchkörper verbunden sind. Durch Bewegen eines Hebels in Längsrichtung der Schiene bewegen sich auch das Betätigungselement in derselben Richtung und damit die Stifte in den Kulissen. Die dadurch entstehende Kulissenführung bewirkt ein Anheben des Arretierkörpers bzw. ein Absenken des Tauchkörpers und umgekehrt. Die Bewegungen des Arretierkörpers und des Tauchkörpers sind miteinander gekoppelt und durch das Betätigen des Betätigungselements kann die Arretiervorrichtung arretiert bzw. gelöst werden.

Die bekannten eingangs dargelegten Befestigungsvorrichtungen haben sich im Prinzip bewährt. Gleichwohl wird, was die der vorliegenden Erfindung zugrunde liegende Aufgabenstellung darstellt, eine weitere Verbesserung bzw. Optimierung bezüglich der Handhabbarkeit, Sicherheit und des Schutzes gegen Fehlbedienungen angestrebt.

Erfindungsgemäß wird diese Aufgabe dadurch gelöst, dass bei einer eingangs dargelegten Befestigungsvorrichtung die Bewegung des mindestens einen Rastelements und die Bewegung des mindestens einen Riegelkörpers relativ zum Grundkörper nicht miteinander gekoppelt sind und dem Rastelement eine Federeinrichtung und ein gesondertes Betätigungselement, insbesondere ein Betätigungshebel zugeordnet sind dergestalt, dass das Rastelement durch Betätigen des Betätigungselements gegen die Vorspannkraft der Federeinrichtung in seine nicht in die Loch-Rast-Schiene eingreifende Stellung anhebbar und bei nicht betätigtem Betätigungselement mittels der Federeinrichtung gegenüber dem Grundkörper in seine abgesenkte, in die Loch-Rast-Schiene eingreifende Stellung vorgespannt ist, wobei ferner dann, wenn der Riegelkörper seine erste Endstellung einnimmt, ein erstes Sperrelement des Riegelkörpers oder eines mit diesem gekoppelten Bauteils dergestalt in ein zweites Sperrelement des Rastelements oder eines mit diesem gekoppelten Bauteils eingreift, dass das Rastelement in seiner durch die Federeinrichtung vorgespannten abgesenkten Stellung fixiert wird.

Im Folgenden wird die Erfindung - ohne hierdurch in irgend einer Weise darauf beschränkt zu sein - anhand von Befestigungsvorrichtungen näher erläutert, die genau ein Rastelement und genau einen Riegelkörper (mit mehreren Riegelelementen) aufweisen, wobei die Betätigungsvorrichtung des Riegelkörpers und das gesonderte Betätigungselement des Rastelements jeweils als Hebel ausgestaltet sind und im Folgenden Bedien- bzw. Betätigungshebel genannt werden. Für Ausführungsformen abweichender Anzahlen von Rast- und Riegelelementen und mit anders ausgeführten Bedien- bzw. Betätigungselementen, z.B. in Form von Exzentern oder Stellrädern, gilt entsprechendes.

Die in die Loch-Rast-Schiene eingreifende abgesenkte Stellung des Rastelements wird im Folgenden mit "Normalstellung", die nicht in die Loch-Rast-Schiene eingreifende angehobene Stellung mit "Verschiebestellung" bezeichnet. Der Riegelkörper befindet sich in seiner ersten Endstellung in der "Verriegelungsstellung" und in seiner entgegengesetzten Endstellung in der "Montagestellung".

Der auf die Loch-Rast-Schiene aufsetzbare Grundkörper weist Befestigungsmöglichkeiten für z.B. Sitze oder andere Fahrzeugausstattungskomponenten auf. Diese Befestigungsmöglichkeiten können beispielsweise durch Pendel- oder sonstige Lager, Augen, Bolzen oder Schrauben realisiert sein.

Der Bedien- und der Betätigungshebel stehen vorzugsweise über mechanische Übertragungsmittel (Verzahnungspaarungen wie Zahnrad/Zahnstange, Hebelage, Excenter oder dergl.) in Wirkungsverbindung mit dem Riegelkörper bzw. dem Rastelement und können stufenlos verstellbar ausgestaltet sein. Der Bedienhebel für den Riegelkörper ist dabei in einer möglichen Ausführungsform zwischen zwei Endstellungen bewegbar. Seine erste Endstellung entspricht hierin der Verriegelungsstellung des Riegelkörpers, seine zweite dessen Montagestellung. Der Betätigungshebel für das Rastelement ist in einer möglichen Ausführungsform ebenfalls zwischen zwei Endstellungen bewegbar. Seine erste Endstellung entspricht hierin der Normalstellung des Rastelements, seine zweite dessen Verschiebestellung.

Zum Aufsetzen und Befestigen der Befestigungsvorrichtung in einer gewünschten Position an der Loch-Rast-Schiene ist der Bedienhebel in seine der Montagestellung des Riegelkörpers entsprechende Stellung zu bringen. Der Betätigungshebel ist bevorzugt aber nicht zwingend (s.u.) in seine der Normalstellung des Rastelements entsprechende Stellung zu bringen. Die Riegelelemente und das Rastelement sind in die entsprechenden Aussparungen der Loch-Rast-Schiene einzubringen, und anschließend ist der Bedienhebel in seine der Verriegelungsstellung des Riegelkörpers entsprechende Stellung zu verschwenken. Hierdurch ist der Grundkörper an der Loch-Rast-Schiene in Längsrichtung und beiden Querrichtungen fixiert. Gleichzeitig ist das Rastelement durch das Zusammenwirken des ersten und des zweiten Sperrelements gegen ungewolltes Lösen aus der Normalstellung gesichert, indem der Riegelkörper mittel- oder unmittelbar derart mit dem Rastelement verbunden ist, dass möglichen auf das Rastelement axial einwirkenden Kräften, die z.B. durch Vibrationen, Schocks oder sonstige Erschütterungen entstehen können, entgegengewirkt wird und das Rastelement auf diese Art in seiner axialen Bewegungsrichtung sicher gehalten wird. Insbesondere kann in diesem Sinne eine Nase oder ein sonstiger Vorsprung des Riegelkörpers in dessen Verriegelungsstellung an einer korrespondierenden Gegenfläche (z.B. einer Vertiefung oder Aussparung, einem Bund, einem Absatz oder einer Stirnfläche) des Rastelements formschlüssig anliegen. Die Erfindung leistet damit einen wesentlichen Beitrag zur Erfüllung stetig steigender Sicherheitstest-Anforderungen an Luftfahrtkomponenten, in denen die Befestigungsvorrichtungen unter anderem einem Vielfachen der Erdbeschleunigung (16 G) ausgesetzt sind und dabei weder Materialschäden erleiden noch sich aus ihrer befestigten Position lösen dürfen. Da umgekehrt das Rastelement dann, wenn sich der Riegelkörper nicht in seiner ersten Endstellung ("Verriegelungsstellung") befindet, gegen die Vorspannkraft der Federeinrichtung angehoben werden kann, kann ein Aufsetzen der Befestigungsvorrichtung, ohne dass das Rastelement exakt mit einer Aussparung der Loch-Rast-Schiene fluchtet, ebenso wenig zu einer Beschädigung der Befestigungsschiene führen wie der Versuch, die Befestigungsvorrichtung an einer solchen Position - durch Umlegen des Betätigungshebels in seine nicht betätigte Stellung - zu fixieren. Auch dies bildet, nachdem eine Beschädigung der Befestigungsschiene ein potentielles Sicherheitsrisiko darstellt, einen wesentlichen sicherheitstechnischen Aspekt.

Ist die Befestigungsvorrichtung bereits an der Loch-Rast-Schiene angebracht, d.h. auf diese aufgesetzt, so kann eine Verschiebung in Längsrichtung (um eine Lochteilung, die üblicherweise einen Zoll beträgt, oder mehrere dieser Lochteilungen) erfolgen, und zwar wie folgt:

Zur Verschiebung um eine Lochteilung sind, jedenfalls wenn die Befestigungsvorrichtung in Anti-Rattle Bauweise ausgeführt ist, der Bedienhebel in seine der Montagestellung des Riegelkörpers entsprechende zweite Stellung und der Betätigungshebel in seine der Verschiebestellung des Rastelements entsprechende Stellung zu bringen. Anschließend ist die Befestigungsvorrichtung geringfügig, z.B. um ca. eine halbe Lochteilung, in die gewünschte Richtung in eine Zwischenstellung zu verschieben. Sodann kann der Betätigungshebel wieder in seine der Normalstellung des Rastelements entsprechende Stellung bewegt werden, wodurch die Federeinrichtung die untere Fläche des Rastelementes auf die darunter liegenden Bereiche der Vorsprünge der Loch-Rast-Schiene drückt. Das Rastelement rastet in die nächste Lochteilung ein, sobald diese durch weiteres Verschieben der Befestigungsvorrichtung in Längsrichtung der Loch-Rast-Schiene erreicht wird. Abschließend ist auch der Bedienhebel in seine der Verriegelungsstellung des Riegelkörpers entsprechende Stellung zu verschwenken, und der Grundkörper ist an der Loch-Rast-Schiene in Längsrichtung (x-Richtung), in Querrichtung (y-Richtung) sowie in Hochrichtung (z-Richtung) fixiert. Entsprechend ist zu verfahren, wenn die auf die Loch-Rast-Schiene aufgesetzte Befestigungsvorrichtung um mehr als eine Lochteilung verschoben werden soll, wobei dabei die Zwischenstellung der Befestigungseinrichtung, in welcher der Betätigungshebel wieder in seine der Normalstellung des Rastelements entsprechende Stellung verschwenkt wird, z.B. etwa eine halbe Lochteilung von der gewünschten Endposition entfernt liegt.

Aus Vorstehendem ist im Übrigen ersichtlich, dass die Befestigungsvorrichtung bei Bedarf grundsätzlich auch bei angehobenem Rastelement auf die Loch-Rast-Schiene aufgesetzt werden kann. Da in der Montagestellung des Riegelkörpers die Riegelelemente typischerweise genau einen Zoll oder ein Vielfaches hiervon von dem Rastelement entfernt sind, kommt beim Aufsetzen der Befestigungsvorrichtung auf die Loch-Rast-Schiene gewöhnlich auch bei angehobenem Rastelement dieses recht genau über einer Aussparung zu liegen.

Die dargestellte Entkopplung des Bedien- und des Betätigungselementes bzw. des Riegelkörpers und des Rastelements erleichtert, wie aus der vorstehenden Erläuterung ohne weiters erkennbar ist, in Verbindung mit dem federgeführten Rastelement das korrekte und sichere Anbringen bzw. Verschieben sowie Befestigen der Befestigungseinrichtung und damit der Sitze oder anderer Fahrzeugausstattungskomponenten auf der Loch-Rast-Schiene, indem der Bediener durch ein akustisch wahrnehmbares und/oder haptisch spürbares Signal des Einrastens feststellen kann, dass sich das Rastelement in einer Lochteilung befindet und der Bedienhebel des Riegelelements geschlossen werden kann. Dadurch kann auf eine umständliche komplizierte optische Steuerung und Kontrolle, dass das Rastelement genau oberhalb der gewünschten Aussparung der Befestigungsschiene positioniert ist, verzichtet werden.

Die Erfindung leistet damit einen Beitrag nicht nur zur einfacheren und komfortableren Handhabung bzw. Bedienung der Befestigungsvorrichtung sondern auch dazu, dass nur in solchen Positionen eine Verriegelungsstellung erzeugt wird, in der eine sichere Befestigung der Innenraumgestaltungen gewährleistet ist und Beschädigungen an der Befestigungsvorrichtung und/oder der Befestigungsschiene vermieden werden. Namentlich wird hierdurch, im Vergleich mit dem Stand der Technik nach der eingangs gewürdigten EP-Patentschrift, die Gefahr reduziert, dass der Betätigungshebel in einer solchen Position der Befestigungsvorrichtung in Richtung der Verriegelungsstellung bewegt wird, in der das Rastelement nicht exakt mit einer Aussparung der Befestigungsschiene fluchtet. Auf diese Weise verringert sich auch die Gefahr einer Fehlbedienung dergestalt, dass die untere Fläche des Rastelements gewaltsam auf die darunter liegenden Oberflächen der Vorsprünge der Loch-Rast-Schiene gepresst wird, was eine Beschädigung der Loch-Rast-Schiene und/oder der Befestigungsvorrichtung und folglich eine nicht sichere Befestigung der Innenraumgestaltungen zur Folge hätte. Neben der verbesserten Handhabbarkeit leistet die vorliegende Erfindung dadurch weiterhin auch einen Beitrag zu einer gesteigerten Sicherheit an Bord. Des Weiteren ermöglicht diese Erfindung im Hinblick auf den begrenzten Raum innerhalb eines Flugzeugs ein hohes Maß an Flexibilität dadurch, dass Fahrzeugausstattungskomponenten direkt an ihrer gewünschten Position durch die Befestigungsvorrichtung auf die Loch-Rast-Schiene aufgesetzt und befestigt werden können, ohne dass eine Verschiebung auf der Rast-Loch-Schiene erfolgen muss.

Der Zustand, in welcher die Befestigungsvorrichtung auf die Loch-Rast-Schiene aufgesetzt ist, sich der Bedienhebel in seiner der Verriegelungsstellung des Riegelkörpers entsprechenden Stellung, der Riegelkörper sich dementsprechend in seiner Verriegelungsstellung befinden, der Betätigungshebel seine der Normalstellung des Rastelements entsprechende Stellung und das Rastelement seine Normalstellung einnehmen und das erste Sperrelement des Riegelkörpers oder des mit diesem gekoppelten Bauteils dergestalt in das zweite Sperrelement des Rastelements oder des mit diesem gekoppelten Bauteils eingreift, so dass das Rastelement in seiner durch die Federeinrichtung vorgespannten Stellung fixiert ist, wird im Folgenden zusammenfassend als "Betriebsstellung" bezeichnet.

In dieser Betriebsstellung kann in einer bevorzugten Ausführungsform eine gegen Klappern gesicherte Verbindung zwischen der Befestigungsvorrichtung und der Loch-Rast-Schiene im Sinne der EP-B-0583295 durch eine geneigte Führung des Riegelkörpers innerhalb des Grundkörpers hergestellt werden, indem der Grundkörper gegenüber der Loch-Rast-Schiene im Sinne einer vorgespannten Anlage des Grundkörpers an der Loch-Rast-Schiene verspannt ist. Da durch die Entkopplung der Bewegungen des Riegelkörpers und des Rastelements typischerweise beim Verschwenken des Bedienhebels allein der Riegelkörper, nicht indessen das Rastelement bewegt wird, kann die Anti-Rattle Verbindung mithilfe des Bedienhebels besonders feinfühlig hergestellt werden. Besonderheiten wie insbesondere eine durch irgendwelche Beschädigungen, Verschmutzungen oder dergleichen begründete Schwergängigkeit fallen der Bedienperson unschwer auf.

Im Hinblick auf eine nicht klappernde, stramme, spielfreie Verbindung der Befestigungsvorrichtung mit der Loch-Rast-Schiene ist besonders vorteilhaft, wenn der Riegelkörper zweigeteilt ausgeführt ist mit einem oberen und einem unteren Element, welche durch Befestigungsmittel miteinander verbunden sind, und zwar idealerweise dergestalt, dass sich der Abstand zwischen dem oberen und unteren Element des Riegelkörpers verstellen lässt. Im Rahmen und zum Zwecke eines spielfreien Toleranzausgleichs zwischen den Riegelelementen und der Loch-Rast-Schiene kann dabei über bevorzugt zwei Schrauben (z.B. Senkkopfschrauben) eine zwei gegenläufige Gewindeabschnitte aufweisende Verstellschraube, die auf Zug und Druck belastbar und - jedenfalls in der Montagestellung des Riegelkörpers - von der dem Bedienhebel zugewandten Seite aus verstellbar ist, der Abstand zwischen dem oberen und unteren Element des Riegelkörpers variiert werden. Durch beispielsweise eingepresste Sicherungsstifte werden die eingestellten Schraubenstellungen gesichert. Diese Verstellmöglichkeit ist z.B. dann von Vorteil, wenn die Oberfläche einer Loch-Rast-Schiene bereits durch Abnutzung Materialabrieb erlitten hat, unterschiedliche Lackdicken bestehen oder Toleranzen unterschiedlicher Hersteller voneinander abweichen und ein dadurch entstehendes Spiel ausgeglichen werden muss.

Des Weiteren kann in der Betriebsstellung verwirklicht werden, dass der Bedienhebel in seiner der Verriegelungsstellung des Riegelkörpers entsprechenden Stellung mit dem Grundkörper über eine Rastvorrichtung verbunden ist und nur mit einem Werkzeug, dessen Gestaltung frei wählbar ist, wieder geöffnet werden kann. Die Erfindung leistet dadurch einen Beitrag, dass die Befestigungsvorrichtung nur von autorisierten Bedienern, die über das entsprechende Werkzeug verfügen, betätigt werden kann, was wiederum ein Sicherheitsaspekt ist.

Eine noch sichere, d.h. die Gefahr einer Fehlbedienung weiter vermindernde, und anwenderfreundlichere Bedienung kann erreicht werden, indem sich der Bedienhebel nur dann in seine der Verriegelungsstellung des Riegelkörpers entsprechende Stellung bewegen lässt, wenn sich der Betätigungshebel in seiner der Normalstellung des Rastelements entsprechenden Stellung befindet. Hierzu kann insbesondere vorgesehen sein, dass der Betätigungshebel in seiner der Verschiebestellung des Rastelements entsprechenden Stellung den Bedienhebel blockiert, d.h. dessen Bewegung in seine der Verriegelungsstellung des Riegelelements entsprechende Stellung behindert. Alternativ oder additiv kann vorgesehen sein, dass - unabhängig von der Stellung des Betätigungshebels für das Rastelement - der Riegelkörper seine erste Endstellung ("Verriegelungsstellung") nur einnehmen kann, wenn sich das Rastelement in seiner (vollständig abgesenkten) Normalstellung befindet. Diese Ausführungsform fördert eine wechselseitige Sicherung zwischen dem Rastelement und dem Riegelkörper, indem der Riegelkörper seine Verriegelungsstellung nur dann einnehmen kann, wenn das Rastelement sich in seiner Normalstellung befindet, und andererseits sich das Rastelement in der Betriebsstellung nicht lösen lässt, bevor der Riegelkörper sich soweit in Richtung seiner Montagestellung bewegt hat, dass das Rastelement in seiner Bewegung nicht mehr durch die Sperrelemente blockiert ist.

Um die Sitzsicherheit des Riegelkörpers in seiner Verriegelungsstellung zu erhöhen, kann eine weitere Federeinrichtung vorgesehen sein, welche den Riegelkörper gegenüber dem Grundkörper in seine Verriegelungsstellung vorspannt. Dadurch wird die Zuverlässigkeit der Befestigungsvorrichtung bei z.B. nicht gänzlich geschlossenem Bedienhebel oder Defekt seiner mechanischen Übertragungsmittel erhöht.

In einer weiteren vorteilhaften Ausführungsform der Erfindung sind, um eine die vorstehend erläuterten Vorteile aufweisende Verbund-Befestigungsvorrichtung bereitzustellen, zwei in Längsrichtung der Loch-Rast-Schiene beabstandete Befestigungsvorrichtungen miteinander durch einen Abstandhalter verbunden, wobei ein an dem Abstandhalter angebrachter verschiebbarer Führungskörper die zwei Riegelkörper derart miteinander koppelt, dass ihre Bewegungen synchronisiert sind, d.h. ihre Riegelelemente stets die gleiche Stellung zueinander einnehmen. Diese Ausführungsform bietet den handhabungstechnischen Vorteil, dass mit einem Bedienhebel die Riegelkörper zweier Befestigungsvorrichtungen verschoben werden können, was besonders vorteilhaft dann ist, wenn sich eine der beiden Befestigungsvorrichtungen an einer schwer oder eventuell sogar gar nicht zugänglichen Stelle befindet.

Im Folgenden wird die vorliegende Erfindung anhand eines in der Zeichnung veranschaulichten bevorzugten Ausführungsbeispiels näher erläutert. Dabei zeigt
- Fig. 1: in perspektivischer Ansicht schräg von oben eine Verbund-Befestigungsvorrichtung mit einer erfindungsgemäßen Befestigungsvorrichtung in deren Betriebsstellung,
- Fig. 2: in perspektivischer Ansicht schräg von unten,
- Fig. 3: in Seitenansicht und
- Fig. 4: im Längsschnitt die bei der Verbund-Befestigungsvorrichtung nach Fig. 1 eingesetzte Befestigungsvorrichtung, ebenfalls in deren Betriebsstellung,
- Fig. 5: in perspektivischer Ansicht schräg von unten,
- Fig. 6: in Seitenansicht und
- Fig. 7: im Längsschnitt die Befestigungsvorrichtung nach den Fig. 2, 3 und 4 in deren Verschiebestellung.

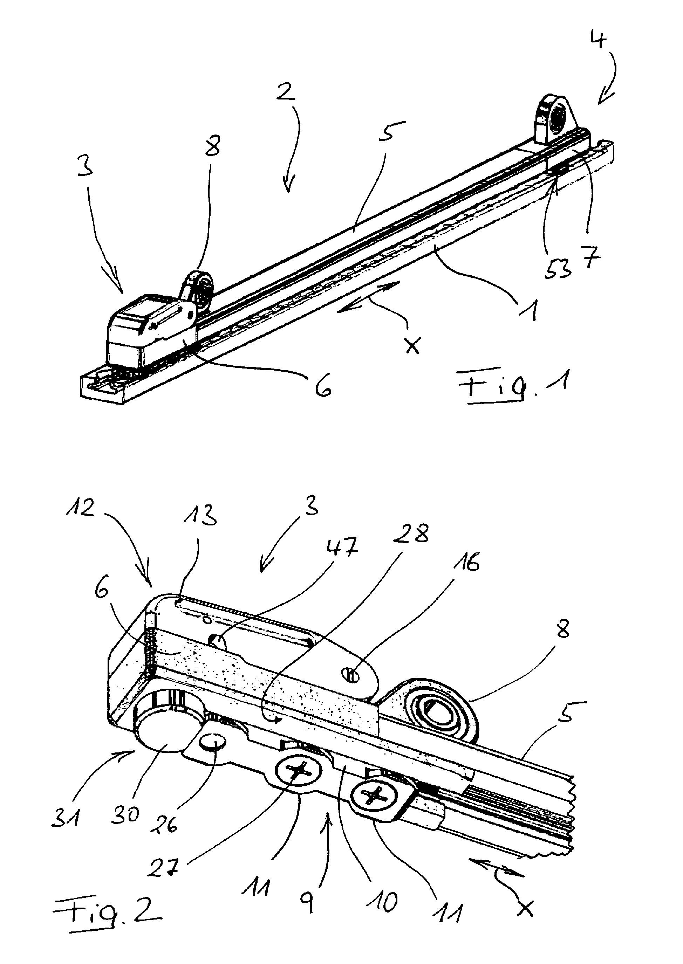

Die in Fig. 1 gezeigte, zum Zusammenwirken mit einer Loch-Rast-Schiene 1 bestimmte und insbesondere zur Montage eines Sitzes auf der Loch-Rast-Schiene 1 geeignete Verbund-Befestigungsvorrichtung 2 umfasst eine erste Befestigungsvorrichtung 3 und eine zweite Befestigungsvorrichtung 4. Die beiden Befestigungsvorrichtungen 3 und 4, von denen typischerweise die erste Befestigungsvorrichtung 3 der Rückseite des zu montierenden Sitzes und die zweite Befestigungsvorrichtung 4 dessen Vorderseite zugeordnet ist, sind mittels eines tunnelförmigen Abstandshalters 5, der die Grundkörper 6 und 7 der beiden Befestigungsvorrichtungen 3 und 4 fest miteinander verbindet, auf einen vorgegebenen Abstand zueinander gehalten.

Bei der ersten Befestigungsvorrichtung 3, welche ein bevorzugtes Ausführungsbeispiel der vorliegenden Erfindung darstellt, kommen dem auf die Loch-Rast-Schiene 1 aufsetzbaren Grundkörper 6 mehrere Funktionen zu. Zum einen dient er, gewissermaßen als Gehäuse, der Aufnahme diverser funktionsrelevanter Bauteile der Befestigungsvorrichtung. An ihm ist weiterhin die dem Verstellen dienende Bedien- und Betätigungsmechanik gelagert. Und schließlich bildet eine Halterung 8, die oben an dem Grundkörper 6 angeordnet und an der beispielsweise der Rahmen eines Sitzes anzubringen ist, einen integralen Bestandteil des Grundkörpers 6.

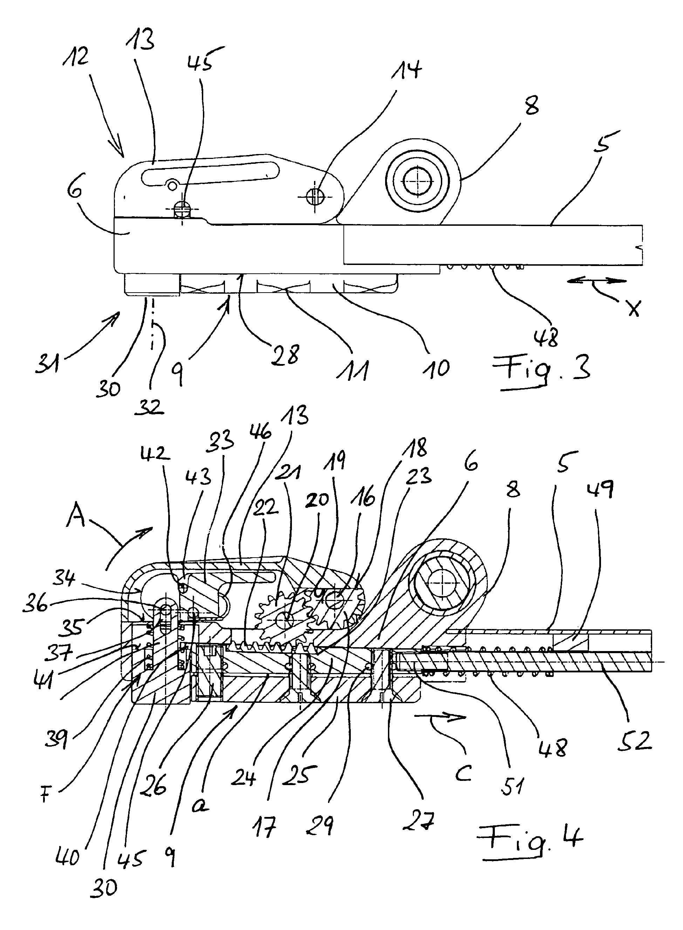

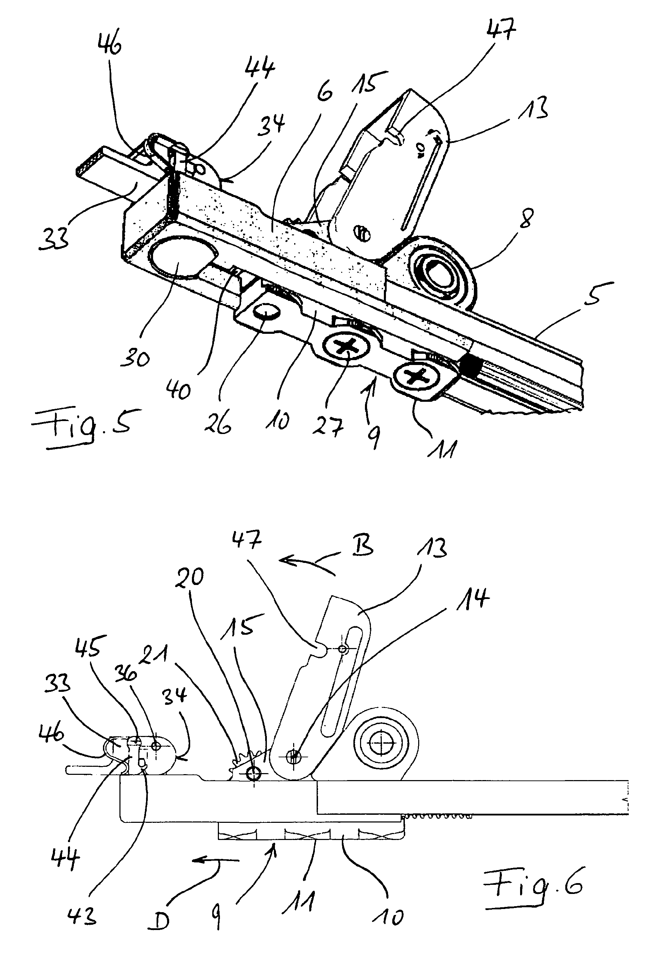

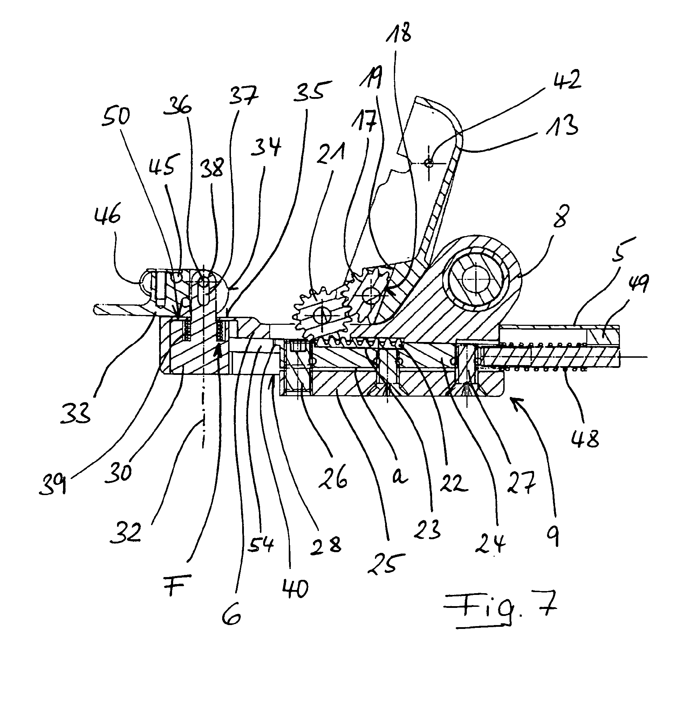

In dem Grundkörper 6 ist ein Riegelkörper 9 in Längsrichtung X der Loch-Rast-Schiene 1 verschiebbar geführt aufgenommen, wobei der Riegelkörper teilweise nach unten aus dem Grundkörper 6 herausragt. An dem betreffenden, nach unten aus dem Grundkörper 6 herausragenden Abschnitt 10 des Riegelkörpers 6 sind drei pilzförmige, zum Eingriff in die Hinterschneidungen der Loch-Rast-Schiene 1 bestimmte Riegelelemente 11 vorgesehen. Verschiebbar ist der Riegelkörper dabei zwischen einer ersten und einer zweiten Endstellung, nämlich zwischen der in den Fig. 2 bis 4 gezeigten Verriegelungsstellung einerseits und der in den Fig. 5 bis 7 gezeigten Montagestellung andererseits. Durch eine geringfügige Neigung der in dem Grundkörper 6 vorgesehenen Führungsnuten 54 für den Riegelkörper gegenüber der durch die Klemmflächen 28 definierten Ebene wird erreicht, dass der Abstand der Riegelelemente 11 zu den Klemmflächen 28 dann, wenn der Riegelkörper 9 seine Verriegelungsstellung einnimmt, geringfügig geringer ist als in der Montagestellung des Riegelkörpers 9. Dies ermöglicht ein spielfreies klemmendes Verspannen der Befestigungsvorrichtung 3 auf der Loch-Rast-Schiene 1 in der Betriebsstellung der Befestigungsvorrichtung 3. Zum Verschieben des Riegelkörpers 9 dient ein von außen zugängliches Bedienelement 12 in Form eines Bedienhebels 13. Dieser ist um die Achse 14 schwenkbar (Pfeile A und B) an dem Grundkörper 6 gelagert, wobei der Grundkörper für die betreffende Lagerung des Bedienhebels 13 zwei Stege 15 aufweist, welche den die Schwenkachse 14 definierenden Stift 16 aufnehmen. Die Verschwenkbewegung des Bedienhebels 13 wird über ein erstes Zahnrad 17, welches über korrespondierende Abflachungen 18 und 19 an dem Zahnrad 17 sowie an dem Bedienhebel 13 drehfest mit letzterem verbunden ist, und ein mit dem ersten Zahnrad 17 kämmendes, um die Achse 20 drehbar gelagertes, als Umlenkzahnrad dienendes zweites Zahnrad 21 auf eine Zahnstange 22 übertragen, welche fest mit dem Riegelkörper 9 verbunden ist. Die Zahnstange 22 ist dabei in eine korrespondierende Aufnahme-Vertiefung 23 des Riegelkörpers 9 eingelegt und dort mit Schrauben fixiert. Durch die beschriebene Koppelung von Bedienhebel 13 und Riegelkörper 9 wird die Verschwenkbewegung (A, B) des Bedienhebels 13 in eine Verschiebebewegung (Pfeile C bzw. D) des Riegelkörpers umgesetzt.

Der Riegelkörper 9 besteht aus einem im Grundkörper 6 geführten ersten Element 24 und einem die drei Riegelelemente 11 aufweisenden zweiten Element 25, wobei der Abstand a zwischen dem ersten Element 24 und dem zweiten Element 25 einstellbar ist. Hierzu sind das erste und das zweite Element 24 und 25 des Riegelkörpers 9 über eine zwei gegenläufige Gewindeabschnitte aufweisende Verstellschraube 26 sowie zwei - lediglich Zugkräfte übertragende - Schrauben 27 miteinander verbunden. Über die Verstellung des Abstandes a zwischen dem ersten Element 24 und dem zweiten Element 25 des Riegelkörpers 9 lässt sich der Abstand der Riegelelemente 11 zu den Klemmflächen 28 des Grundkörpers 6 einstellen und insbesondere an individuelle Bedingungen anpassen. Die Verstellschraube 26 ist dabei in der Montagestellung des Riegelkörpers (Fig. 5 bis 7) von oben, d.h. der dem Bedienhebel 13 zugewandten Seite aus, zu betätigen. Eingepresste Sicherungsstifte 29, die insbesondere aus Kunststoff bestehen können, sichern die eingestellten Schraubenstellungen.

In dem Grundkörper 6 ist weiterhin ein als Rastbolzen 30 ausgeführtes Rastelement 31 verschiebbar geführt, und zwar in Richtung der auf der Längsrichtung X der Loch-Rast-Schiene 1 senkrecht stehenden Achse 32. Dabei ist der Rastbolzen 30 zwischen zwei Endstellungen verschiebbar, nämlich zwischen einer (in den Fig. 2 bis 4 gezeigten) abgesenkten Normalstellung, in welcher er in eine Aussparung der Loch-Rast-Schiene 1 eingreifen kann, und einer (in den Fig. 5 bis 7 gezeigten) angehobenen Verschiebstellung, in der kein Eingriff in die Loch-Rast-Schiene 1 möglich ist. Dabei ist die Verschiebebewegung des Rastbolzens 30 unabhängig von der des Riegelkörpers 9; sie wird über einen gesonderten, vorliegend als Betätigungshebel 33 ausgeführtes Betätigungselement bewerkstelligt. Hierzu weist der Betätigungshebel 33 einen Exzentermechanismus auf mit einer etwa halbkreisförmigen Gleitfläche 34, welche sich auf einer Anlagefläche 35 des Grundkörpers 6 gleitend abstützt, und einem außermittig zur Gleitfläche 34 angeordneten Exzenterstift 36. Letzterer greift in ein Langloch 37 ein, welches an einem oberen Fortsatz 38 des Rastbolzens 30 angeordnet ist und sich parallel zur Achse 32 erstreckt. Dies ermöglicht, dass der Rastbolzen 30 auch in der der Normalstellung entsprechenden Stellung des Betätigungshebels 33 (Fig. 2 bis 4) seine angehobene, nicht in die Loch-Rast-Schiene 1 eingreifende Stellung (Fig. 5 bis 7) einnehmen kann, namentlich wenn sich der Rastbolzen nicht genau über einer Ausnehmung der Loch-Rast-Schiene 1 befindet. Allerdings ist der Rastbolzen mittels einer durch die Rastfeder 39 realisierten Federeinrichtung F in seine abgesenkte Stellung ("Normalstellung") vorgespannt, so dass er, wenn der Betätigungshebel 33 die der Normalstellung des Rastbolzens 30 entsprechenden Stellung einnimmt (Fig. 2 bis 4), umgehend in eine Aussparung der Loch-Rast-Schiene einrastet, wenn er mit einer solchen fluchtet. Um den Rastbolzen 30 in seine "Verschiebstellung" anzuheben und außer Eingriff mit der Loch-Rast-Schiene 1 zu bringen, insbesondere um die Befestigungsvorrichtung 3 auf der Loch-Rast-Schiene 1 aufliegend längs dieser verschieben zu können, wird der Betätigungshebel in seine in den Fig. 5 bis 7 gezeigte Stellung geschwenkt.

Befindet sich der Betätigungshebel 33 in seiner der Verschiebestellung des Rastelements 31 entsprechenden Stellung (Fig. 5 bis 7), so wird der Bedienhebel 13 durch Teile des Betätigungshebels 33 davon abgehalten, seine der Verriegelungsstellung des Riegelelements 9 entsprechende Stellung einzunehmen. Erst wenn sich der Betätigungshebel 33 in seiner der Normalstellung des Rastelements 31 entsprechenden Stellung befindet, kann der Bedienhebel 13 in seine der Verriegelstellung des Riegelelements 9 entsprechende Stellung gebracht werden. Zusätzlich ist, solange nicht das Rastelement 31 seine vollständig abgesenkte Stellung, d.h. seine Normalstellung einnimmt, auch der Riegelkörper 9 selbst daran gehindert, die Verriegelungsstellung einzunehmen, und zwar durch das stirnseitig an dem Riegelkörper 9 angeordnete nasenförmige Sperrelement 40, welches zum rastenden Zusammenwirken mit der oberen Stirnfläche 41 des Rastbolzens 30, die auf diese Weise ein zweites, korrespondierendes Sperrelement 50 bildet, bestimmt ist. Die beiden zusammenwirkenden Sperrelemente 40 und 50 verhindern, wenn die Befestigungsvorrichtung 3 ihre Betriebsstellung einnimmt, im Übrigen ein Anheben des Rastbolzens 30 gegen die Kraft der Rastfeder 39.

Wenn in der Normalstellung der Befestigungsvorrichtung der Bedienhebel 13 und der Betätigungshebel 33 ihr in den Fig. 2 bis 4 der Zeichnung dargestellte Stellung einnehmen, rastet der Bedienhebel als zusätzliche Sicherung dergestalt ein, dass er nur unter Verwendung von Werkzeug wieder geöffnet, d.h. nach oben geschwenkt werden kann. Hierzu rastet ein den Bedienhebel 13 durchsetzender Raststift 42 hinter den beiden Klinken 43 eines Zwillingshebels 44 ein, welcher an dem Betätigungshebel 33 um die Achse 45 schwenkbar gelagert und mittels der Zwillingsfeder 46 in seine Raststellung vorgespannt ist. Die Verrastung des Bedienhebels 13 kann gelöst werden, indem der Zwillingshebel 44 mittels eines Werkzeugs um seine Achse 45 leicht gegen die Vorspannung der Zwillingsfeder 46 verdreht wird. Hierzu weist der Bedienhebel 13 an beiden Seiten jeweils eine - in der Betriebsstellung - mit der Achse 45 fluchtende Aussparung 47 auf, durch die hindurch das betreffende Werkzeug auf den Zwillingshebel 44 aufgesetzt werden kann.

Eine Riegelfeder 48 ist zwischen dem Riegelkörper 9 und einer an dem Abstandshalter 5 angeordneten Stützplatte 49 eingespannt. Sie spannt den Riegelkörper 9 in dessen Verriegelungsstellung vor. In dem tunnelförmigen Abstandhalter 5 ist eine Koppelstange 52 in Längsrichtung des Abstandshalters 5 verschiebbar aufgenommen. Die Koppelstange 52 ist über einen Gewindeabschnitt 51 fest mit dem oberen, ersten Element 24 des Riegelkörper 9 der ersten Befestigungsvorrichtung 3 verbunden. Am anderen Ende ist die Koppelstange 52 in entsprechender Weise mit dem - in dem Grundkörper 7 der zweiten Befestigungsvorrichtung 4 in Längsrichtung der Loch-Rast-Schiene 1 verschiebbar geführten - Riegelkörper 53 fest verbunden. Im Sinne einer Verbund-Befestigungsvorrichtung 1 werden durch den Bedienhebel 13 hervorgerufene Längsbewegungen des Riegelkörpers 9 der ersten Befestigungsvorrichtung 3 über die starre Verbindung der beiden Riegelkörper 9 und 53 der ersten und der zweiten Befestigungsvorrichtung 3 und 4 untereinander direkt auf den Riegelkörper 53 der zweiten Befestigungsvorrichtung 4 übertragen. Die Koppelstange 52 dient im Übrigen als Führung für die Riegelfeder 48.

## Patentansprüche

1. Befestigungsvorrichtung zur Befestigung eines Sitzes oder einer sonstigen Fahrzeugausstattungskomponente an einer Loch-Rast-Schiene (1), umfassend einen auf die Loch-Rast-Schiene (1) aufsetzbaren Grundkörper (6), mindestens einen an dem Grundkörper (6) in Längsrichtung der Loch-Rast-Schiene (1) zwischen zwei Endstellungen verschiebbar geführten, mindestens ein pilzförmiges, zum Eingriff in die Hinterschneidungen der Loch-Rast-Schiene (1) bestimmtes Riegelelement (11) aufweisenden Riegelkörper (9), welcher mittels eines Bedienelements (12) relativ zum Grundkörper (6) verschiebbar ist, und mindestens ein an dem Grundkörper (6) quer zur Längsrichtung der Loch-Rast-Schiene (1) verschiebbar geführtes Rastelement (31), welches zwischen einer in die Loch-Rast-Schiene (1) eingreifenden abgesenkten und einer nicht in die Loch-Rast-Schiene (1) eingreifenden angehobenen Stellung bewegbar ist,
wobei in der ersten Endstellung der Verschiebebewegung des Riegelkörpers (9) das Riegelelement (11) zwischen zwei Vorsprüngen der Loch-Rast-Schiene (1) in deren Hinterschneidungen eingreift, die Bewegung des Rastelements (31) und die Bewegung des Riegelkörpers (9) relativ zum Grundkörper (6) nicht miteinander gekoppelt sind, und dem Rastelement (31) eine Federeinrichtung (F) und ein gesondertes Betätigungselement, insbesondere ein Betätigungshebel (33) zugeordnet sind dergestalt,
dass das Rastelement (31) durch Betätigen des Betätigungselements gegen die Vorspannkraft der Federeinrichtung (F) in seine nicht in die Loch-Rast-Schiene (1) eingreifende Stellung anhebbar und bei nicht betätigtem Betätigungselement mittels der Federeinrichtung (F) gegenüber dem Grundkörper (6) in seine abgesenkte, in die Loch-Rast-Schiene (1) eingreifende Stellung vorgespannt ist, wobei ferner dann, wenn der Riegelkörper (9) seine erste Endstellung einnimmt, ein erstes Sperrelement (40) des Riegelkörpers (9) oder eines mit diesem gekoppelten Bauteils dergestalt in ein zweites Sperrelement (50) des Rastelements (31) oder eines mit diesem gekoppelten Bauteils eingreift, dass das Rastelement (31) in seiner durch die Federeinrichtung (F) vorgespannten Stellung fixiert wird.

2. Befestigungsvorrichtung nach Anspruch 1, **dadurch gekennzeichnet, dass** in einer ersten Endstellung der Verschiebebewegung des Riegelkörpers (9) der Grundkörper (6) gegenüber der Loch-Rast-Schiene (1) im Sinne einer vorgespannten Anlage des Grundkörpers (6) an der Loch-Rast-Schiene (1) verspannt ist.

3. Befestigungsvorrichtung nach Anspruch 2, **dadurch gekennzeichnet, dass** als Bedienelement (12) ein Bedienhebel (13) vorgesehen ist, der zwischen einer der ersten Endstellung der Verschiebebewegung des Riegelkörpers (9) zugeordneten ersten Stellung und einer der zweiten Endstellung der Verschiebebewegung des Riegelkörpers (9) zugeordneten zweiten Stellung verschwenkbar ist, wobei der Bedienhebel (13) in seiner ersten Stellung mit dem Grundkörper (6) mittels einer nur unter Nutzung eines Werkzeugs lösbaren Rastung verrastet.

4. Befestigungsvorrichtung nach einem der Ansprüche 1 bis 3, **dadurch gekennzeichnet, dass** das Bedienelement (12) seine erste Stellung nur einnehmen kann, wenn das Betätigungselement des Rastelements (31) nicht betätigt ist.

5. Befestigungsvorrichtung nach einem der Ansprüche 1 bis 4, **dadurch gekennzeichnet, dass** der Riegelkörper (9) gegenüber dem Grundkörper (6) mittels einer Federeinrichtung (48) in seine erste Endstellung der Verschiebebewegung vorgespannt ist.

6. Befestigungsvorrichtung nach einem der Ansprüche 1 bis 5, **dadurch gekennzeichnet, dass** der Riegelkörper (9) aus einem im Grundkörper (6) geführten ersten Element (24) und einem das mindestens eine Riegelelement (11) aufweisenden zweiten Element (25) besteht, wobei das erste und zweite Element dergestalt mit einander verbunden sind, dass ihr Abstand (a) zu einander veränderlich ist.

7. Verbund-Befestigungsvorrichtung (2), umfassend eine Befestigungsvorrichtung (3) nach einem der Ansprüche 1 bis 6, einen mit deren Grundkörper (6) verbundenen, sich in Längsrichtung der Loch-Rast-Schiene (1) erstreckenden Abstandshalter (5) und einen an diesem angeordneten Grundkörper (7) einer zweiten Befestigungsvorrichtung (4), in welchem ein mit dem Riegelkörper (9) der ersten Befestigungsvorrichtung (3) gekoppelter, mindestens ein pilzförmiges, zum Eingriff in die Hinterschneidungen der Loch-Rast-Schiene (1) bestimmtes Riegelelement aufweisender weiterer Riegelkörper (53) in Längsrichtung der Loch-Rast-Schiene (1) verschiebbar geführt ist.
